# EUROPEAN PATENT APPLICATION

(11) **EP 4 708 819 A1**
(43) Date of publication of application: **11.03.2026**
(21) Application number: 25199936.3
(22) Date of filing: 03.09.2025
(51) Int. Cl.: H04L 67/10, H04L 67/12, H04L 67/303, H04L 67/306, H04L 67/00

(54) **METHOD FOR ASSOCIATING A DEVICE TO AT LEAST ONE GYMNASTIC MACHINE AND SYSTEM IMPLEMENTING THE METHOD**

(30) Priority: 05.09.2024 IT 202400019849
(71) Applicant: Technogym S.p.A., 47521 Cesena (FC) (IT)
(72) Inventor: SARTONI, Gianni, 47521 Cesena (FC) (IT)
(74) Representative: Botti & Ferrari S.p.A.

(57) **Abstract**

System (S) for associating a user device (D) to at least one gymnastic machine (M) comprising at least one gymnastic machine (M) and a cloud (C), operatively connected to each other, where the data relating to said user are stored, characterized in that said at least one gymnastic machine (M) is provided with an association module (A), configured to create an automatic association subsequent to the first association between said device (D) and said at least one gymnastic machine (M), by means of the data stored in said cloud (C).

## Description

### Field of application

The present invention relates to a method for associating a device to a gymnastic machine, in particular to gymnastic machines comprising a control logic unit or connected to a control logic unit.

The present invention also relates to a system implementing said method.

More in detail, the invention relates to a method of the above-mentioned type, which is designed and provided specifically to allow a user to connect a device, such as a headphone or a earphone, to a machine or to several machines that are in the same space, by carrying out a first and single connection procedure, wherein the connection is long lasting.

Hereinafter, the description will be directed to a method and a system for connecting headphones to one or more gymnastic machines that are in the same space, but it is clear that it should not be considered limited to this specific use.

### Prior art

It is currently known that a user can connect his/her headphones to a gymnastic machine through a connection of the Bluetooth^{™}-type.

To activate the connection, one needs to open the panel of the Bluetooth^{™} devices on a gymnastic machine, search for the name of his/her headphones, and select it. The connection will then be activated, and the user will be able to listen to the content related to the gymnastic machine through his/her headphones.

It is currently also possible to connect the headphones to a specific machine, just once. In particular, it is possible to connect the headphones to the authenticated user on a single specific gymnastic machine the first time. The headphone data is stored directly on the machine and then, upon subsequent connection or pairing, the gymnastic machine automatically recognizes the previously associated headphones.

Therefore, the known systems and methods only allow an association between a specific machine and a specific device, thus requiring to once again carry out pairing between the headphones and another gymnastic machine that is in the same space, thereby causing inconvenience to the user who has to interrupt the training, associate once again his/her headphones to another gymnastic machine, and resume the training.

In light of the disadvantages and unresolved problems of the state of the art, the object of the present invention is to provide a method for a single association between a device and one or more gymnastic machines, so that the user does not have to interrupt the training and can continue to use his/her device without interruption.

A further object of the present invention is to provide a system for carrying out the method.

The technical problem underlying the present invention is thus to devise a method for a single and long-lasting association of a device to one or more gymnastic machines that are in the same space, so as to allow a user to use the device associated to the gymnastic machines continuously throughout the training and also for subsequent trainings.

### Summary of the invention

The idea underlying the present invention is to provide a method for associating a device to one or more gymnastic machines.

An object of the present invention is thus a system for associating a user device to at least one gymnastic machine comprising at least one gymnastic machine and a cloud, operatively connected to each other, where the data relating to said user are stored, wherein said at least one gymnastic machine is provided with an association module, configured to create an automatic association subsequent to the first association between said device and said at least one gymnastic machine, by means of the data stored in said cloud.

Further according to the invention, said device is a headphone or a earphone.

Again according to the invention, said system may comprise a plurality of gymnastic machines, and the automatic association subsequent to the first association occurs between said device and a subsequent gymnastic machine of said plurality of gymnastic machines, different from the first gymnastic machine.

Preferably, according to the invention, said system may comprise at least one interface provided with said association module configured to create an automatic association subsequent to the first association between said device and said at least one interface, by means of the data stored in said cloud.

Another object of the present invention is an operating method of a system comprising at least one gymnastic machine and a cloud, operatively connected to each other, where the data relating to said user are stored, at least one user device to be associated with said at least one gymnastic machine, comprising the following steps:
110. performing the user login on said at least one gymnastic machine;
120. verifying whether it is the first user login on said gymnastic machine, if so, generating a user unique address and related configuration files and connecting said at least one device to said gymnastic machine; if not, downloading the user unique address and the related configuration files from said cloud and automatically connecting said at least one device to said gymnastic machine.

Further according to the invention, said subsequent login occurs once again on said gymnastic machine or on a further gymnastic machine.

Again according to the invention, said method may comprise the following further steps:
130. deactivating the Bluetooth^{™} module of said gymnastic machine;
150. replacing the unique address of the gymnastic machine and the related configuration files of said gymnastic machine with the user unique address and with the related user configuration files;
160. reactivating the Bluetooth^{™} module of said gymnastic machine, having the user unique address as machine unique address;
170. verifying whether the user profile is associated with at least one device;
171. should the verification of step 170. be successful, performing an automatic connection between said at least one device and said at least one gymnastic machine;
180. deactivating the Bluetooth^{™} module of said at least one gymnastic machine;
190. restoring the machine unique address and the related configuration files of said at least one gymnastic machine and reactivating the Bluetooth^{™} module of said at least one gymnastic machine.

Preferably, according to the invention, steps 130, 150, 160, 170, 180, and 190 are performed by an association module comprised in said at least one gymnastic machine.

Again according to the invention, in said step 140, the machine unique address and the related configuration files of said at least one gymnastic machine are temporarily stored in the memory of said at least one gymnastic machine.

Further according to the invention, at the end of the use of said at least one gymnastic machine, the user's sensitive and personal data, the user unique address and the related user configuration files are stored on a user personal login area to said cloud for a subsequent use.

### Brief description of the drawings

In the drawings:
- Figure 1 shows a schematic view of the system implementing the method for associating a device to a gymnastic machine, the system being object of the present invention; and

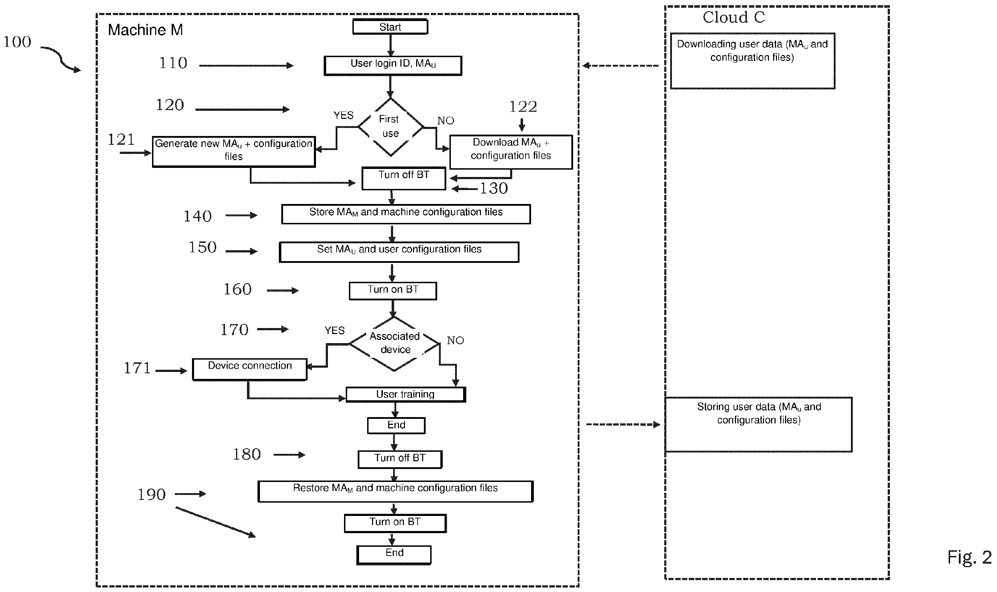

- Figure 2 shows a block diagram of the operation of the method for associating a device to a gymnastic machine, the method being object of the present invention.

### Detailed description

Referring to the attached figures, the method 100 for associating a device D to at least one gymnastic machine M, object of the present invention, allows to associate a device D such as a headphone, a heart rate strap, a watch or a pedometer to a gymnastic machine M but also to all the other gymnastic machines M or interfaces I, such as screens or functional groups, that are in the same space in which the user is performing the training.

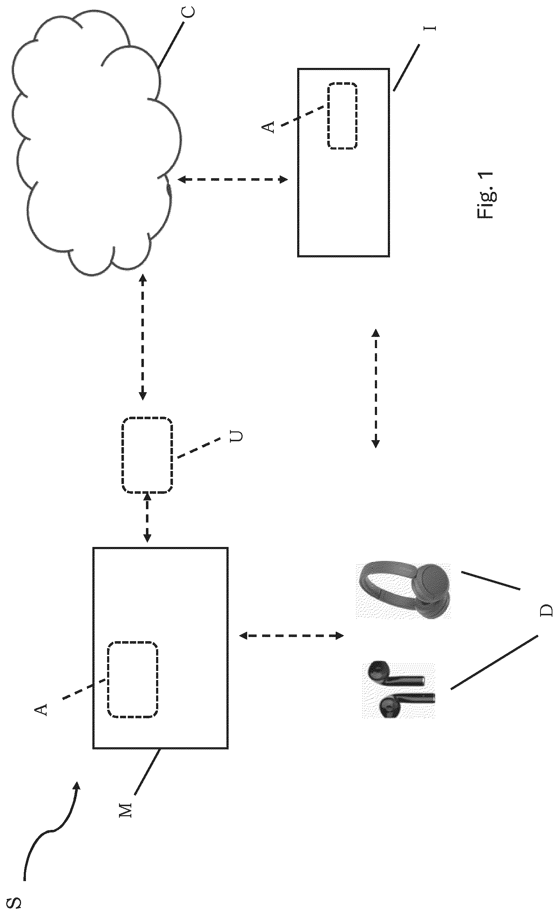

Referring in particular to figure 1, the system S implementing the method 100, object of the present invention, essentially comprises at least one gymnastic machine M, comprising an association module A or application, a remote server or cloud C, and possibly also an interface I, which in turn comprises an association module A or application.

The present invention refers in particular to gymnastic machines M comprising a control logic unit U or connectable to a control logic unit U, through which one can log in to said remote server or cloud C.

Said cloud C is in particular a platform in which various contents, including the machines' operating softwares, the training programs, the users' profiles and the like, are stored.

Usually, upon the first login of a user to the machines M, within the cloud C, the user's own user profile or ID is created, to which all his/her own personal data, regarding his/her own vital statistics, trainings, physical data, and other information, are associated. Said user profile is recognized by the gymnastic machines M to which the user logs in.

Upon the first use of a gymnastic machine M by the user, said gymnastic machine associates the user, and thus also the ID, with a unique address MA_{U}, also known as Media Access Control - MAC Address.

It is known that the MAC Address in information technology and telecommunications is a 48-bit code associated with each device implementing the Bluetooth^{™} standard, used to assign a unique identity to each of the connected devices, thereby allowing local unicast-type communications.

Thus, each gymnastic machine M has its own unique address MA_{M} associated, and also each interface I has its own unique address MA_{I} associated.

Similarly, upon the first use of an interface I, having its own unique address MA_{I}, by the user, the interface I associates the user, and thus also the ID, with a unique address MA_{U}.

The gymnastic machines M comprise a module or application A allowing the connection of the device D to the gymnastic machine M, according to the present invention.

In particular, the module A is configured to deactivate the Bluetooth^{™} module of the gymnastic machine M, replace the unique address MA_{M} of the gymnastic machine M with the user unique address MA_{U}, download the configuration files containing the pairing data of the device D, reactivate the Bluetooth^{™} module of the gymnastic machine M, connect the user's device D to the gymnastic machine M and deactivate once again the Bluetooth^{™} module of the gymnastic machine M when the user interrupts the training.

The system S may comprise a plurality of gymnastic machines M, and the automatic association subsequent to the first association occurs between said device D and a subsequent gymnastic machine M of said plurality of gymnastic machines M, different from the first gymnastic machine.

The operating method 100 of the system S, through the module A, comprises the following steps.

Preliminarily, the user has already registered his/her profile, namely, he/she has already created a personal login area to log in to the cloud C, in which area the profile of the user identified with an identification code ID is created.

In step 110, the user accesses the gymnastic machine and logs in; at the same time, all the user's configuration data is downloaded from the cloud C, in particular the MA_{U} and the configuration files, if they are already present.

In the subsequent step 120, it is verified whether it is the first login for the user. If it is the first login, no user data have been downloaded from the cloud and thus, in a new substep 121, a new MA_{U} is generated. If it is not the first login, the download of the data of step 122 is successful.

In a subsequent step 130, said association module A deactivates the Bluetooth^{™} module of the gymnastic machine M.

In a subsequent step 140, the configuration files of the machine M and its MA_{M} are temporarily stored in the memory of the gymnastic machine M.

In a subsequent step 150, the unique address of the gymnastic machine MA_{M}, and the configuration files of the machine M are replaced with the user unique address MA_{U} and with the user configuration files.

In a subsequent step 160, the association module A reactivates the Bluetooth^{™} module of the gymnastic machine M, for which the user unique address MA_{U} has become the machine unique address MA_{M}, thus, the gymnastic machine M has the user unique address MA_{U} as machine unique address.

In a subsequent step 170, the association module A verifies whether the user profile is associated with a device D. If not, the user may start its training without using the device D. If the user profile is associated with a device D, in a substep 171 the device is automatically connected to the gymnastic machine M, without the need for pairing between the device D and the gymnastic machine M, and the user performs the training using the device D, in particular the headphones, listening to the contents coming from the machine M or the cloud C.

At the end of the training, the user's sensitive and personal data, the configuration files and MA_{U} are encrypted and stored in the personal login area to the cloud C, so that, upon a subsequent login by the user, all said data may be sent again from the cloud to the gymnastic machine M.

In a subsequent step 180, the association module A deactivates the Bluetooth^{™} module of the gymnastic machine M.

In a subsequent step 190, the association module A restores the configuration files of the machine M and the MA_{U} and reactivates the Bluetooth^{™} module so that the machine is ready for the next user.

All the user's sensitive and personal data such as the sex, age, weight, hexadecimal code of possible heart rate straps used by the user during the training, the records of the results of the user's trainings and the like, are removed from the gymnastic machine M to allow other users to log in.

Also similarly, the above-described method 100 remains unchanged if the association occurs between a device D and an interface I, in this case, the interface unique address MA_{I}, will be replaced by the user unique address MA_{U}.

The above-described method 100 remains unchanged even if the user logs in to a further second gymnastic machine M of the plurality of gymnastic machines M comprised in the system, after logging in to a first gymnastic machine M.

As it is evident from the above description, the advantage of the method and the system that are objects of the present invention is to speed up the procedure of connection of a device D to one or more gymnastic machines M, both in the case of repeated logins over time on the same machine and in the case login is performed on multiple gymnastic machines M during the same training.

Obviously a person skilled in the art, in order to satisfy any specific requirements which might arise, may make numerous modifications and variations to the system described above, all of which are however contained within the scope of protection of the invention, as defined by the following claims.

## Claims

1. System (S) for associating a user device (D) to at least one gymnastic machine (M) comprising at least one gymnastic machine (M) and a cloud (C), operatively connected to each other, where the data relating to said user are stored, **characterized in that** said at least one gymnastic machine (M) is provided with an association module (A), configured to create an automatic association subsequent to the first association between said device (D) and said at least one gymnastic machine (M), by means of the data stored in said cloud (C).

2. System (S) according to the preceding claim, **characterized in that** said device (D) is a headphone or earphone.

3. System (S) according to any one of the preceding claims, **characterized**
**in that** it comprises a plurality of gymnastic machines (M); and
**in that** said automatic association subsequent to the first association occurs between said device (D) and a subsequent gymnastic machine (M) of said plurality of gymnastic machines (M), different from the first gymnastic machine (M).

4. System (S) according to any one of the preceding claims, **characterized in that** it comprises at least one interface (I) provided with said association module (A) configured to create an automatic association subsequent to the first association between said device (D) and said at least one interface (I), by means of the data stored in said cloud (C).

5. Operating method (100) of a system (S) comprising at least one gymnastic machine (M) and a cloud (C), operatively connected to each other, where the data relating to said user are stored, at least one user device (D) to be associated with said at least one gymnastic machine (M), **characterized in that** it comprises the following steps:
110. performing the user login on said at least one gymnastic machine (M);
120. verifying whether it is the first user login on said gymnastic machine (M), if so, generating a unique user address (MA_{U}) and related configuration files and connecting said at least one device (D) to said gymnastic machine (M); if not, downloading the unique user address (MA_{U}) and the related configuration files from said cloud (C) and automatically connecting said at least one device (D) to said gymnastic machine (M).

6. Method (100) according to the preceding claim, **characterized in that** said subsequent login occurs once again on said gymnastic machine (M) or on a further gymnastic machine (M).

7. Method (100) according to any one of claims 5 or 6, **characterized in that** it comprises the following further steps:
130. deactivating the Bluetooth^{™} module of said gymnastic machine (M);
150. replacing the unique address of the gymnastic machine (MA_{M}) and the related configuration files of said gymnastic machine (M) with the unique user address (MA_{U}) and with the related user's configuration files;
160. reactivating the Bluetooth^{™} module of said gymnastic machine (M), having the user unique address (MA_{U}) as machine unique address;
170. verifying whether the user profile is associated with at least one device (D);
171. should the verification of step 170. be successful, performing an automatic connection between said at least one device (D) and said at least one gymnastic machine (M);
180. deactivating the Bluetooth^{™} module of said at least one gymnastic machine (M);
190. restoring the machine unique address (MA_{M}) and the related configuration files of said at least one gymnastic machine (M) and reactivating the Bluetooth^{™} module of said at least one gymnastic machine (M).

8. Method (100) according to any one of claims 5-7, **characterized in that** steps 130, 150, 160, 170, 180, and 190 are performed by an association module (A) comprised in said at least one gymnastic machine (M).

9. Method (100) according to any one of claims 5-8, **characterized in that** in said step 140, the machine unique address (MA_{M}) and the related configuration files of said at least one gymnastic machine (M) are temporarily stored in the memory of said at least one gymnastic machine (M).

10. Method (100) according to any one of claims 5-9, **characterized in that**, at the end of the use of said at least one gymnastic machine (M), the user's sensitive and personal data, the user unique address (MA_{U}) and the related user configuration files are stored on a user personal login area to said cloud (C) for a subsequent use.
